# EUROPÄISCHE PATENTSCHRIFT

(11) **EP 2 874 826 B1**
(45) Veröffentlichungstag und Bekanntmachung des Hinweises auf die Patenterteilung: **28.02.2018**
(21) Anmeldenummer: 13737169.6
(22) Anmeldetag: 01.07.2013
(51) Int. Cl.: B60B 27/00, F16C 19/18

(54) **RADLAGERELEMENT UND RADLAGEREINHEIT**
BEARING FOR A WHEEL HUB AND BEARING UNIT FOR A WHEEL HUB
ROULEMENT DE ROUE ET ENSEMBLE DE ROULEMENT DE ROUE

(30) Priorität: 19.07.2012 DE 102012212687
(43) Veröffentlichungstag der Anmeldung: 27.05.2015
(73) Patentinhaber: Aktiebolaget SKF, 415 50 Göteborg (SE)
(72) Erfinder: BOSCO, Domenico, I-10071 Borgaro Torinese (IT); MAHR, Reinhold, 97491 Aidhausen (DE)
(74) Vertreter: Kuhstrebe, Jochen
(86) Internationale Anmeldenummer: PCT/EP2013/063807
(87) Internationale Veröffentlichungsnummer: WO 2014/012777

(56) Entgegenhaltungen:
- EP-A1- 0 057 348
- DE-A1-102008 022 936
- FR-A6- 2 172 553
- JP-A- H07 317 777

## Beschreibung

Die Erfindung geht aus von einer Radlagereinheit nach dem Oberbegriff des Anspruchs 1, wie z.B. aus der DE 10 2008 022 936 bekannt. Es ist eine Radlagereinheit mit einem Radlagerelement bekannt, welches mehrere Öffnungen mit Innengewinde aufweist, die dazu vorgesehen sind, bei einer Befestigung eines Rads an dem Radlagerelement mitzuwirken. Die Radlagereinheit umfasst ein zentral angeordnetes, im wesentlichen zylinderförmiges Positionierungselement, welches dazu vorgesehen ist, das Rad relativ zu dem Radlagerelement zu positionieren, und welches einen Bereich aufweist, der sich in einem Zustand der Radlagereinheit, in welchem das von der Radlagereinheit zu lagernde Rad von der Radlagereinheit demontiert ist, relativ zu einem Teil des Radlagerelements in eine axiale Richtung der Radlagereinheit erhebt. Das Positionierungselement und das Radlagerelement sind einstückig ausgebildet.

Die Aufgabe der Erfindung besteht insbesondere darin, eine gattungsgemäße Radlagereinheit mit einer hohen Effizienz bereitzustellen. Die Aufgabe wird erfindungsgemäß durch die Merkmale des Patentanspruchs 1, 8 oder 9 gelöst, während vorteilhafte Ausgestaltungen und Weiterbildungen der Erfindung den Unteransprüchen entnommen werden können. Die Erfindung geht aus von einer Radlagereinheit mit wenigstens einem Radlagerelement, welches zumindest ein Befestigungselement aufweist, das dazu vorgesehen ist, bei einer Befestigung eines Rads an dem Radlagerelement mitzuwirken, und mit einem Positionierungselement, welches dazu vorgesehen ist, das Rad relativ zu dem Radlagerelement zu positionieren, und welches wenigstens einen Bereich aufweist, der sich in einem Zustand der Radlagereinheit, in welchem das von der Radlagereinheit zu lagernde Rad von der Radlagereinheit demontiert ist, relativ zu wenigstens einem Teil des Radlagerelements in eine axiale Richtung der Radlagereinheit erhebt.

Es wird vorgeschlagen, dass das Positionierungselement getrennt von dem Radlagerelement ausgebildet ist. Unter "vorgesehen" soll insbesondere speziell ausgelegt und/oder speziell ausgestattet verstanden werden. Darunter, dass das Positionierungselement "getrennt" von dem Radlagerelement ausgebildet ist, soll insbesondere verstanden werden, dass wenigstens ein Teil des Positionierungselements teil eines einstückig ausgebildeten ersten Bauteils ist und wenigstens ein Teil des Radlagerelements teil eines einstückig ausgebildeten zweiten Bauteils ist, wobei sich das erste und das zweite Bauteil unterscheiden. Unter "einstückig" soll insbesondere aus einem Guss und/oder aus einer Spritzung und/oder nur unter Zerstörung trennbar verstanden werden. Mit einer erfindungsgemäßen Ausgestaltung kann eine hohe Effizienz erreicht werden. Insbesondere kann eine einfache Montage bei einer effizienten und insbesondere stabilen Bauweise der Radlagereinheit erreicht werden. Insbesondere kann erreicht werden, dass wenigstens ein Innenring der Radlagereinheit durch eine Öffnung des Radlagerelements, welche auf einer Seite des Radlagerelements angeordnet ist, an welche ein Rad an die Radlagereinheit zu montieren ist, in das Radlagerelement eingeführt werden kann.

Ferner wird vorgeschlagen, dass die Radlagereinheit wenigstens ein Wälzlager mit zumindest einem Innenring aufweist und ein kleinster Innendurchmesser einer Öffnung des Positionierungselements kleiner ist als ein größter Außendurchmesser des Innenrings. Hierdurch kann eine stabile Bauweise und insbesondere eine hohe Tragfähigkeit des Wälzlagers erreicht werden.

Ferner wird ein Montageverfahren zur Montage einer Radlagereinheit vorgeschlagen, bei welchem wenigstens ein Innenring eines Wälzlagers durch eine Öffnung eines Radlagerelements, welche an einer Seite des Radlagerelements, die bei einer Montage eines Rads an das Radlagerelement dem Rad zugewandt ist, angeordnet ist, in einen Innenbereich des Radlagerelements eingeführt wird. Dadurch kann eine hohe Effizienz und insbesondere eine einfache Montage einer effizienten Radlagereinheit erreicht werden.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt eine Ansicht einer erfindungsgemäßen Radlagereinheit mit Blickrichtung entlang einer axialen Richtung der Radlagereinheit, und
Fig. 2 zeigt einen II-II-Teilschnitt durch die Radlagereinheit.

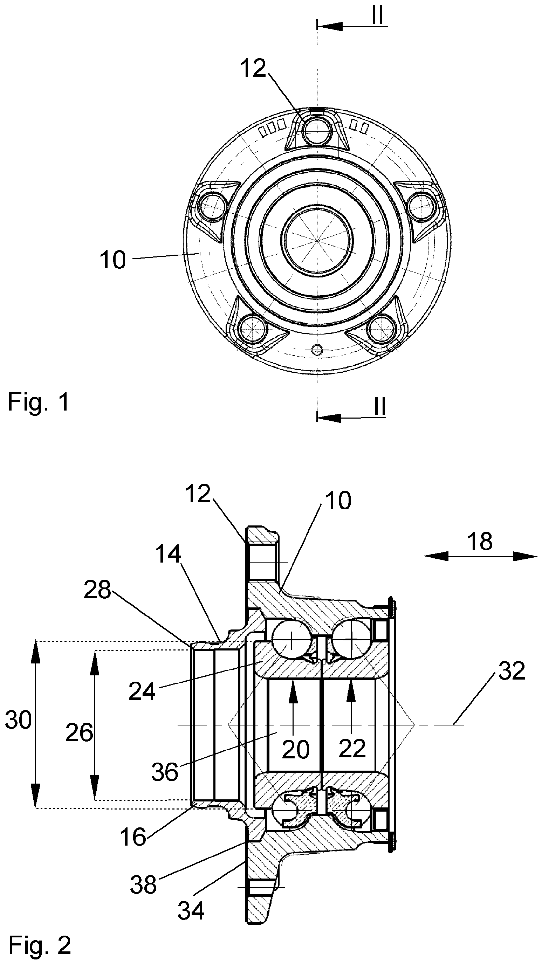

Figur 1 zeigt eine Ansicht einer erfindungsgemäßen Radlagereinheit, welche ein Radlagerelement 10 und ein erstes und ein zweites Wälzlager 20, 22 aufweist. Das Radlagerelement 10 ist einstückig ausgebildet, geschmiedet und weist einen Außenring des ersten Wälzlagers 20 und einen Außenring des zweiten Wälzlagers 22 auf. Ferner weist das Radlagerelement 10 ein Befestigungselement 12 auf, welches ein Schraubenloch mit Innengewinde zum Einschrauben einer Schraube ist (Figur 2). Das Radlagerelement 10 weist weitere, mit dem Befestigungselement 12 baugleiche Befestigungselemente auf. In einem vollständig montierten Zustand ist ein Rad mit Hilfe von Schrauben an den Befestigungselementen festgeschraubt. Des Weiteren umfasst die Radlagereinheit ein Positionierungselement 14, das dazu vorgesehen ist, das Rad relativ zu dem Radlagerelement zu positionieren. Bei einem Betriebsvorgang drehte sich das Radlagerelement 10 relativ zu einem Innenring 24 des Wälzlagers 20 um eine Achse 32. Bei einer Montage des Rads an das Radlagerelement legt das Positionierungselement 14, während das Rad an dem Radlagerelement anliegt, eine Position des Rads relativ zu der Achse 32 fest, so dass die Achse 32 das Rad zentral durchsetzt und die Schrauben zur Befestigung des Rads in die Befestigungselemente eingeschraubt werden können. Das Radlagerelement ist frei von sich in die axiale Richtung 18 des Radlagerelements erstreckenden Erhebungen, welche zu einer Positionierung des Rads relativ zu dem Radlagerelement in Radialrichtungen des Radlagerelements dienen können.

Das Positionierungselement 14 weist einen Bereich 16 auf, der sich in einem Zustand der Radlagereinheit, in welchem das von der Radlagereinheit zu lagernde Rad von der Radlagereinheit demontiert ist, relativ zu einem Teil des Radlagerelements, welcher in dem vollständig montierten Zustand an dem Rad anliegt, in eine axiale Richtung 18 der Radlagereinheit erhebt. Das Positionierungselement ist getrennt von dem Radlagerelement 10 ausgebildet, und zwar ist das Positionierungselement in das Radlagerelement eingepresst. Ferner sind das Positionierungselement und das Radlagerelement jeweils einstückig ausgebildet. Das Positionierungselement ist rotationssymmetrisch in Bezug auf die Achse 32. Außerdem umgibt es die Achse 32. Des Weiteren ist das Radlagerelement aus einem Stahl gebildet. Alternativ kann es aus Aluminium bestehen.

Der Innenring 24 ist innerhalb des Radlagerelements 10 angeordnet. Ein kleinster Innendurchmesser 26 einer Öffnung 28 des Positionierungselements ist kleiner als ein größter Außendurchmesser 30 des Innenrings 24.

Die Radlagereinheit ist Teil eines Personenkraftwagens.

Bei einer Montage der Radlagereinheit wird der Innenring 24 durch eine Öffnungsberandung 38 des Radlagerelements in einen Innenbereich 36 des Radlagerelements eingeführt. Die Öffnungsberandung 38 ist ausschließlich an einer Seite 34 des Radlagerelements, die in dem vollständig montierten Zustand an dem Rad anliegt, angeordnet. Nach dem Einführen des Innenrings 24 in den Innenbereich 36 wird das Positionierungselement 14 an dem Radlagerelement befestigt.

Alternativ ist denkbar, dass das Positionierungselement in das Radlagerelement eingeschraubt ist. Ferner ist alternativ denkbar, dass das Positionierungselement aus einem Kunststoffelement und einem ringförmigen Blechstreifen besteht, welcher das Kunststoffelement an dem Radlagerelement befestigt.

### Bezugszeichenliste

| | |
|---|---|
| 10 | Radlagerelement |
| 12 | Befestigungselement |
| 14 | Positionierungselement |
| 16 | Bereich |
| 18 | Richtung |
| 20 | Wälzlager |
| 22 | Wälzlager |
| 24 | Innenring |
| 26 | Innendurchmesser |
| 28 | Öffnung |
| 30 | Außendurchmesser |
| 32 | Achse |
| 34 | Seite |
| 36 | Innenbereich |
| 38 | Öffnungsberandung |

## Patentansprüche

1. Radlagereinheit mit wenigstens einem Radlagerelement (10), welches zumindest ein Befestigungselement (12) aufweist, das dazu vorgesehen ist, bei einer Befestigung eines Rads an dem Radlagerelement (10) mitzuwirken, und mit einem Positionierungselement (14), welches dazu vorgesehen ist, das Rad relativ zu dem Radlagerelement zu positionieren, und welches wenigstens einen Bereich (16) aufweist, der sich in einem Zustand der Radlagereinheit, in welchem das von der Radlagereinheit zu lagernde Rad von der Radlagereinheit demontiert ist, relativ zu wenigstens einem Teil des Radlagerelements in eine axiale Richtung (18) der Radlagereinheit erhebt, wobei das Positionierungselement getrennt von dem Radlagerelement ausgebildet ist,
wobei die Radlagereinheit wenigstens ein Wälzlager (20) mit Wälzkörpern und zumindest einem Innenring (24) aufweist,
wobei das Radlagerelement (10) einen Außenring des Wälzlagers bildet,
wobei das Radlagerelement in axialer Richtung zwischen einer Lauffläche der Wälzkörper und einem dem Positionierungselement (10) zugewandten axialen Ende einen Innendurchmesser aufweist, der immer größer oder gleich einem maximalen Durchmesser der Lauffläche der Wälzkörper auf dem Außenring ist,
**dadurch gekennzeichnet, dass** das Positionierungselement eine Achse (32), um welche sich wenigstens ein Teil der Radlegereinheit bei einem Betriebsvorgang dreht, umgibt.

2. Radlagereinheit nach Anspruch 1, wobei die Radlagereinheit wenigstens ein Wälzlager (20) mit zumindest einem Innenring (24) aufweist und ein kleinster Innendurchmesser (26) einer Öffnung (28) des Positionierungselements kleiner ist als ein größter Außendurchmesser (30) des Innenrings.

3. Radlagereinheit nach Anspruch 2, wobei der Innenring (24) innerhalb des Radlagerelements angeordnet ist.

4. Radlagereinheit nach einem der Ansprüche 1 bis 3, wobei das Positionierungselement (14) einstückig ausgebildet ist und/oder das Radlagerelement einstückig ausgebildet ist.

5. Radlagereinheit nach einem der Ansprüche 1 bis 4 wobei das Radlagerelement frei von sich in eine axiale Richtung (18) des Radlagerelements ersteckenden Erhebungen ist, welche zu einer Positionierung des Rads relativ zu dem Radlagerelement in Radialrichtungen des Radlagerelements vorgesehen sind.

6. Radlagereinheit nach Anspruch 5 wobei das Radlagerelement geschmiedet und/oder kaltgerollt ist.

7. Kraftfahrzeug, insbesondere Personenkraftwagen, mit einer Radlagereinheit nach einem der Ansprüche 1 bis 5.

8. Radlagereinheit mit wenigstens einem Radlagerelement (10), welches zumindest ein Befestigungselement (12) aufweist, das dazu vorgesehen ist, bei einer Befestigung eines Rads an dem Radlagerelement (10) mitzuwirken, und mit einem Positionierungselement (14), welches dazu vorgesehen ist, das Rad relativ zu dem Radlagerelement zu positionieren, und welches wenigstens einen Bereich (16) aufweist, der sich in einem Zustand der Radlagereinheit, in welchem das von der Radlagereinheit zu lagernde Rad von der Radlagereinheit demontiert ist, relativ zu wenigstens einem Teil des Radlagerelements in eine axiale Richtung (18) der Radlagereinheit erhebt, wobei das Positionierungselement getrennt von dem Radlagerelement ausgebildet ist,
**dadurch gekennzeichnet, dass** das Positionierungselement (10) aus einem Kunststoffelement und einem ringförmigen Blechstreifen besteht, welcher das Kunststoffelement an dem Radlagerelement befestigt.

9. Radlagereinheit mit wenigstens einem Radlagerelement (10), welches zumindest ein Befestigungselement (12) aufweist, das dazu vorgesehen ist, bei einer Befestigung eines Rads an dem Radlagerelement (10) mitzuwirken, und mit einem Positionierungselement (14), welches dazu vorgesehen ist, das Rad relativ zu dem Radlagerelement zu positionieren, und welches wenigstens einen Bereich (16) aufweist, der sich in einem Zustand der Radlagereinheit, in welchem das von der Radlagereinheit zu lagernde Rad von der Radlagereinheit demontiert ist, relativ zu wenigstens einem Teil des Radlagerelements in eine axiale Richtung (18) der Radlagereinheit erhebt, wobei das Positionierungselement getrennt von dem Radlagerelement ausgebildet ist,
**dadurch gekennzeichnet, dass** das Positionierungselement (14) in das Radlagerelement (10) eingeschraubt ist und eine Achse (32), um welche sich wenigstens ein Teil der Radlegereinheit bei einem Betriebsvorgang dreht, umgibt.

## Claims

1. Wheel bearing unit having at least one wheel bearing element (10) which has at least one attachment element (12) which is provided also to act in the case of an attachment of a wheel to the wheel bearing element (10), and having a positioning element (14) which is provided to position the wheel relative to the wheel bearing element and which has at least one region (16), which in a state of the wheel bearing unit in which the wheel which is to be supported by the wheel bearing unit is removed from the wheel bearing unit, rises in an axial direction (18) of the wheel bearing unit relative to at least part of the wheel bearing element,
wherein the positioning element is embodied separately from the wheel bearing element,
wherein the wheel bearing unit has at least one roller bearing (20) with rolling bodies and at least one inner ring (24),
wherein the wheel bearing element (10) forms an outer ring of the roller bearing,
wherein the wheel bearing element has, in the axial direction between a running surface of the rolling bodies and an axial end facing the positioning element (10), an inner diameter which is always larger or equal to a maximum diameter of the running surface of the rolling bodies on the outer ring,
**characterized in that** the positioning element surrounds an axle (32) around which at least part of the wheel bearing unit rotates during an operating process.

2. Wheel bearing unit according to Claim 1, wherein the wheel bearing unit has at least one roller bearing (20) having at least one inner ring (24), and a minimum inner diameter (26) of an opening (28) of the positioning element is smaller than a maximum outer diameter (30) of the inner ring.

3. Wheel bearing unit according to Claim 2, wherein the inner ring (24) is arranged within the wheel bearing element.

4. Wheel bearing unit according to one of Claims 1 to 3, wherein the positioning element (14) is embodied in one piece and/or the wheel bearing element is embodied in one piece.

5. Wheel bearing unit according to one of Claims 1 to 4, wherein the wheel bearing element is free of elevated portions which extend in an axial direction (18) of the wheel bearing element and are provided for positioning the wheel relative to the wheel bearing element in radial directions of the wheel bearing element.

6. Wheel bearing unit according to Claim 5, wherein the wheel bearing element is forged and/or cold rolled.

7. Motor vehicle, in particular passenger car, having a wheel bearing unit according to one of Claims 1 to 5.

8. Wheel bearing unit having at least one wheel bearing element (10) which has at least one attachment element (12) which is provided also to act in the case of an attachment of a wheel to the wheel bearing element (10), and having a positioning element (14) which is provided to position the wheel relative to the wheel bearing element and which has at least one region (16), which in a state of the wheel bearing unit in which the wheel which is to be supported by the wheel bearing unit is removed from the wheel bearing unit, rises in an axial direction (18) of the wheel bearing unit relative to at least part of the wheel bearing element,
wherein the positioning element is embodied separately from the wheel bearing element, **characterized in that** the positioning element (10) is composed of a plastic element and a ring-shaped sheet-metal strip which attaches the plastic element to the wheel bearing element.

9. Wheel bearing unit having at least one wheel bearing element (10) which has at least one attachment element (12) which is provided also to act in the case of an attachment of a wheel to the wheel bearing element (10), and having a positioning element (14) which is provided to position the wheel relative to the wheel bearing element and which has at least one region (16), which in a state of the wheel bearing unit in which the wheel which is to be supported by the wheel bearing unit is removed from the wheel bearing unit, rises in an axial direction (18) of the wheel bearing unit relative to at least part of the wheel bearing element,
wherein the positioning element is embodied separately from the wheel bearing element, **characterized in that** the positioning element (14) is screwed into the wheel bearing element (10) and surrounds an axle (32) around which at least part of the wheel bearing unit rotates during an operating process.

## Revendications

1. Unité de palier de roue comprenant au moins un élément de palier de roue (10) qui présente au moins un élément de fixation (12) qui est prévu pour coopérer dans le cas d'une fixation d'une roue à l'élément de palier de roue (10), et comprenant un élément de positionnement (14) qui est prévu pour positionner la roue par rapport à l'élément de palier de roue et qui présente au moins une région (16) qui se soulève par rapport à au moins une partie de l'élément de palier de roue dans une direction axiale (18) de l'unité de palier de roue dans un état de l'unité de palier de roue dans lequel la roue devant être supportée par l'unité de palier de roue est démontée de l'unité de palier de roue,
l'élément de positionnement étant réalisé de manière séparée de l'élément de palier de roue, l'unité de palier de roue présentant au moins un palier à roulement (20) avec des corps de roulement et au moins une bague intérieure (24), l'élément de palier de roue (10) formant une bague extérieure du palier à roulement,
l'élément de palier de roue présentant un diamètre intérieur dans la direction axiale entre une surface de roulement des corps de roulement et une extrémité axiale tournée vers l'élément de positionnement (10), qui est toujours supérieur ou égal à un diamètre maximal de la surface de roulement des corps de roulement sur la bague extérieure,
**caractérisée en ce que**
l'élément de positionnement entoure un axe (32) autour duquel tourne au moins une partie de l'unité de palier de roue pendant un fonctionnement.

2. Unité de palier de roue selon la revendication 1, dans laquelle l'unité de palier de roue présente au moins un palier à roulement (20) avec au moins une bague intérieure (24), et un plus petit diamètre intérieur (26) d'une ouverture (28) de l'élément de positionnement est plus petit qu'un plus grand diamètre extérieur (30) de la bague intérieure.

3. Unité de palier de roue selon la revendication 2, dans laquelle la bague intérieure (24) est disposée à l'intérieur de l'élément de palier de roue.

4. Unité de palier de roue selon l'une quelconque des revendications 1 à 3, dans laquelle l'élément de positionnement (14) est réalisé d'une seule pièce et/ou l'élément de palier de roue est réalisé d'une seule pièce.

5. Unité de palier de roue selon l'une quelconque des revendications 1 à 4, dans laquelle l'élément de palier de roue est exempt de rehaussements s'étendant dans une direction axiale (18) de l'élément de palier de roue, lesquels rehaussements sont prévus en vue d'un positionnement de la roue par rapport à l'élément de palier de roue dans des directions radiales de l'élément de palier de roue.

6. Unité de palier de roue selon la revendication 5, dans laquelle l'élément de palier de roue est forgé et/ou laminé à froid.

7. Véhicule automobile, en particulier véhicule de transport léger, comprenant une unité de palier de roue selon l'une quelconque des revendications 1 à 5.

8. Unité de palier de roue comprenant au moins un élément de palier de roue (10) qui présente au moins un élément de fixation (12) qui est prévu pour coopérer dans le cas d'une fixation d'une roue sur l'élément de palier de roue (10), comprenant un élément de positionnement (14) qui est prévu pour positionner la roue par rapport à l'élément de palier de roue, et qui présente au moins une région (16) qui se soulève par rapport à au moins une partie de l'élément de palier de roue dans une direction axiale (18) de l'unité de palier de roue dans un état de l'unité de palier de roue dans lequel la roue devant être supportée par l'unité de palier de roue est démontée de l'unité de palier de roue,
l'élément de positionnement étant réalisé de manière séparée de l'élément de palier de roue, **caractérisée en ce que**
l'élément de positionnement (10) se compose d'un élément en plastique et d'une bande de tôle de forme annulaire qui fixe l'élément en plastique sur l'élément de palier de roue.

9. Unité de palier de roue comprenant au moins un élément de palier de roue (10) qui présente au moins un élément de fixation (12) qui est prévu pour coopérer dans le cas d'une fixation d'une roue sur l'élément de palier de roue (10), et comprenant un élément de positionnement (14) qui est prévu pour positionner la roue par rapport à l'élément de palier de roue et qui présente au moins une région (16) qui se soulève par rapport à au moins une partie de l'élément de palier de roue dans une direction axiale (18) de l'unité de palier de roue dans un état de l'unité de palier de roue dans lequel la roue devant être supportée par l'unité de palier de roue est démontée de l'unité de palier de roue, l'élément de positionnement étant réalisé de manière séparée de l'élément de palier de roue,
**caractérisée en ce que**
l'élément de positionnement (14) est vissé dans l'élément de palier de roue (10) et entoure un axe (32) autour duquel tourne au moins une partie de l'unité de palier de roue pendant un fonctionnement.
